Europäisches Patentamt

European Patent Office

Office européen des brevets

(19)

(11) Veröffentlichungsnummer: **0 120 980**
**B1**

(12) **EUROPÄISCHE PATENTSCHRIFT**

(45) Veröffentlichungstag der Patentschrift:
24.06.87

(51) Int. Cl.⁴: **H 04 N 1/40**

(21) Anmeldenummer: 83103166.1

(22) Anmeldetag: 30.03.83

(54) Schaltungsanordnung für die Kompensation von Übersprechen bei elektrooptischen Abtastvorrichtungen.

(43) Veröffentlichungstag der Anmeldung:
10.10.84 Patentblatt 84/41

(45) Bekanntmachung des Hinweises auf die Patenterteilung:
24.06.87 Patentblatt 87/26

(84) Benannte Vertragsstaaten:
DE FR GB IT

(56) Entgegenhaltungen:
GB - A - 2 001 825
GB - A - 2 023 371
US - A - 3 800 078
US - A - 4 084 196
US - A - 4 328 425

PATENTS ABSTRACTS OF JAPAN, Band 5, Nr. 55, 16. April 1981, Seite 727 E 52;

(73) Patentinhaber: **IBM DEUTSCHLAND GMBH, Pascalstrasse 100, D-7000 Stuttgart 80 (DE)**

(84) Benannte Vertragsstaaten: **DE**

(73) Patentinhaber: **International Business Machines Corporation, Old Orchard Road, Armonk, N.Y. 10504 (US)**

(84) Benannte Vertragsstaaten: **FR GB IT**

(72) Erfinder: **Ruppert, Werner, Dipl.-Ing., Gartenstrasse 9, D-7036 Schönaich (DE)**

(74) Vertreter: **Jost, Ottokarl, Dipl.-Ing., Schönaicher Strasse 220, D-7030 Böblingen (DE)**

## Beschreibung

Die Erfindung betrifft eine Schaltungsanordnung für die Kompensation des zwischen benachbarten Zellen einer linearen Photodiodenanordnung auftretenden Übersprechens in einer Abtastvorrichtung für eine beleuchtete Vorlage.

Elektrooptische Abtastvorrichtungen für Vorlagen aller Art sind in grosser Zahl bekanntgeworden. Im vorliegenden Fall soll von einer Abtastanordnung ausgegangen werden, wie sie beispielsweise in den US-Patentschriften 3 800 078 und 3 800 079 offenbart ist. Die abzutastende Vorlage wird mit einer Lichtleiteroptik, die vor dem optischen System angeordnet ist, unter 45° ausgeleuchtet. Ein Teil des Lichtleiterbündels wird für eine Intensitätsregelung der Lichtquelle benutzt. Als Detektor für die von der abzutastenden Vorlage reflektierte Strahlung wird eine selbstabtastende Photodiodenanordnung in integrierter Schaltungstechnik verwendet, wobei jede Photodiode ein densitometrisches Abtastbild der abgetasteten Fläche liefert. Zur Abtastung einer solchen Vorlage muss dann die Photodiodenanordnung in einem Abtastkopf beispielsweise in x- und y-Richtung über die Vorlage geführt werden. Die der Photodiodenanordnung entnommenen Signale müssen mehreren Operationen unterzogen werden, ehe sie zur Weiterverarbeitung einer Datenverarbeitungsanlage zugeführt werden können. Zwei dieser Operationen sind aus den obengenannten Patentschriften bereits bekannt, nämlich die Schwarzpegelkorrektur und die Weisspegelkorrektur.

Es hat sich jedoch gezeigt, dass bei Photodioden dieser Art zwischen benachbarten Dioden eine Art Übersprechen auftritt. In der britischen Patentanmeldung GB-A 2 023 371 ist deshalb bereits eine Schaltungsanordnung für die Kompensation des zwischen benachbarten Zellen einer linearen Photodiodenanordnung auftretenden Übersprechens in einer Abtastvorrichtung für eine beleuchtete Vorlage beschrieben worden, bei der ein speziell gestaltetes Tiefpassfilter verwendet wird.

Aufgabe der Erfindung ist es dagegen, eine digitale Schaltungsanordnung der eingangs genannten Art zu schaffen, durch die dieses Übersprechen so weit verringert werden kann, dass das Restübersprechen vernachlässigbar gering ist. Die erfindungsgemässe Schaltungsanordnung zeichnet sich dadurch aus, dass zur praktischen Beseitigung des störenden Signalanteils a in der i-ten Zelle aus den Signalen der (i-1)ten und (i+1)ten Zelle unter Verwendung des Echtwertes $R_i$ des aus der i-ten Zelle abgeleiteten Signals und der Echtwerte der aus der (i+1)ten und (i-1)ten Zelle abgeleiteten Signale $R_{(i+1)}$ und $R_{(i-1)}$ und der Einwirkung des Signalanteils a auf das Echtsignal $R_i$ der i-ten Zelle das kompensierte Signal $\hat{I}_i$ gemäss der Formel

$$\hat{I}_i \approx \frac{R_i - a\,R_{i+1} - a\,R_{i-1}}{1 - 2a - 2a^2}$$

ableitbar ist. Vorzugsweise ist die Anordnung dabei so getroffen, dass am Ausgang der linearen Photodiodenanordnung ein Schieberegister mit mindestens drei Ausgängen angeschlossen ist, mit dessen ersten und dritten Ausgang je eine Inverterstufe und je ein daran angeschlossenes Stellglied für den Signalanteil a verbunden ist, und dass der Ausgang des ersten Stellgliedes und der zweite Ausgang des Schieberegisters an einer ersten Addierstufe angeschlossen sind, deren Ausgang an einem Eingang eienr zweiten Addierstufe angeschlossen ist, deren zweiter Eingang mit dem Ausgang des zweiten Stellgliedes verbunden ist.

Weitere Ausführungsformen der Erfindung sind den weiteren Ansprüchen im einzelnen zu entnehmen.

Die Erfindung wird nunmehr anhand eines Ausführungsbeispiels in Verbindung mit den beigefügten Zeichnungen im einzelnen näher erläutert. In den Zeichnungen zeigt:

Fig. 1 eine schematische Darstellung der Ladungsverteilung in benachbarten Dioden beim Übersprechen,

Fig. 2 eine Schaltungsanordnung zur Kompensation des Übersprechens und

Fig. 3 eine Darstellung einer Impulsfunktion mit 10% Übersprechen.

Bei einer Bestrahlung einer Photodiodenanordnung werden in den einzelnen Photodioden Photonen erzeugt, die sich jedoch nicht auf die gerade ausgeleuchtete Photodiodenzelle beschränken, sondern in die benachbarte Zelle auswandern. Man sieht daher, dass bei einer Beleuchtung der i-ten Zelle ein Signalanteil bzw. Ladungsanteil a in der (i-1)ten Zelle und ebenso ein Ladungsanteil a in der (i+1)ten Zelle auftritt. In gleicher Weise tritt bei der Beleuchtung der (i-1)ten Zelle ein entsprechender Anteil a in der i-ten Zelle auf, und bei Beleuchtung der (i+1)ten Zelle tritt ein ebensolcher Ladungsbetrag a in der i-ten Zelle und natürlich auch in der (i+2)ten Zelle auf.

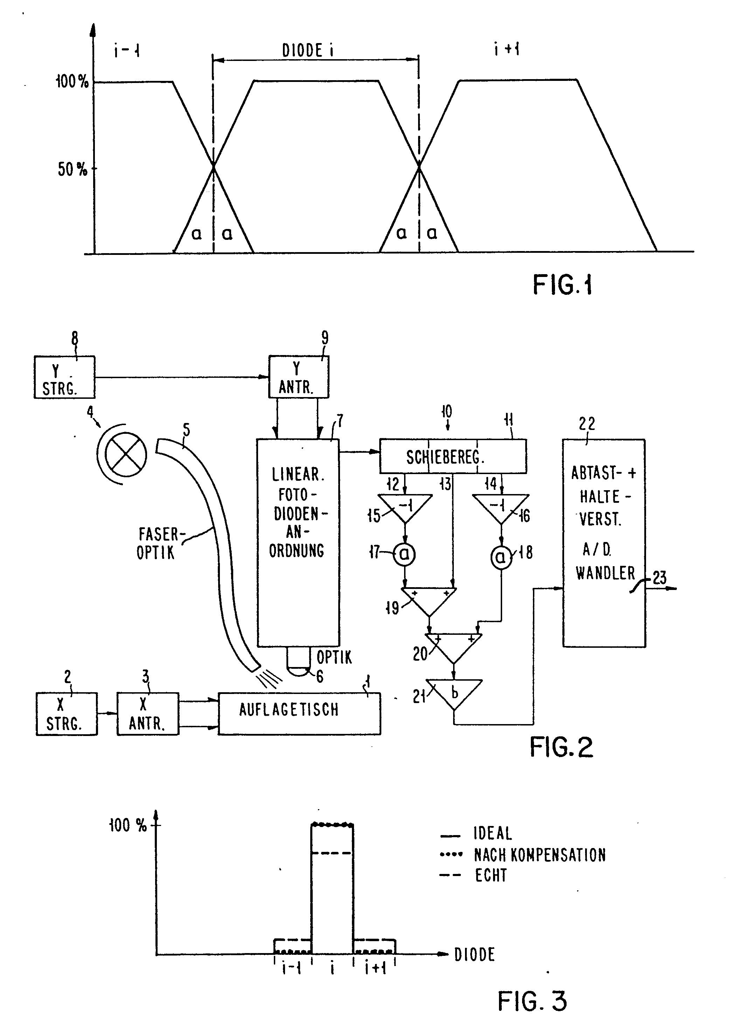

Man erhält also die in Fig. 1 dargestellte Ladungsverteilung. Die Ladungsverteilung für die Diode I in Fig. 1 ist also gleich

$$R_i = I_i - 2a I_i + a I_i + a I_{i+1} \tag{1}$$

wobei $I_i$ als ideale Ladung anzusehen ist. Aus der Gleichung (1) kann die Korrektur erster Näherung abgeleitet werden wie folgt

$$R_i - aR_{i+1} - aR_{i-1} = I_i(1 - 2a - 2a^2) \\ + I_{i+1} \times 2a^2 - I_{i-1}a^2 \\ + I_{i-1} \times 2a^2 - I_{i-1}a^2 \tag{2}$$

für kleine Werte von a (a < 0,1 oder weniger als 10% Übersprechen) wird das Idealsignal gleich

$$\hat{I}_i \approx \frac{R_i - a\,R_{i+1} - a\,R_{i-1}}{1 - 2a - 2^a} \tag{3}$$

Die Schaltungsanordnung zur Durchführung dieses Verfahrens soll nun im einzelnen näher erläutert werden.

Ein Auflagetisch 1, auf dem die abzutastende Vorlage angebracht werden kann, lässt sich beispielsweise über eine x-Steuerung 2 und einen x-Antrieb 3 in x-Richtung verschieben. Für die Beleuchtung des Auflagentisches 1 ist eine Lichtquelle 4 vorgesehen, deren Licht über ein Lichtleiterbündel 5 auf den Vorlagentisch gerichtet ist. Eine Optik 6 ist in Verbindung mit einer linearen Photodiodenanordnung 7 vorgesehen, die über eine y-Steuerung 8 und einen y-Antrieb 9 in y-Richtung verfahrbar ist. Selbstverständlich ist es durchaus möglich, den Auflagetisch stationär zu halten und die Optik mit der Photodiodenanordnung in x- und y-Richtung zu verfahren.

Die durch die Optik 6 abgetastete Vorlage ruft in den einzelnen Zellen der Photodiodenanordnung entsprechend der Intensität der von der Vorlage reflektierten Strahlung Ladungen hervor, die taktgesteuert einer Korrekturschaltung oder Kompensationsschaltung 10 zugeführt werden. Diese Kompensationsschaltung 10 enthält ein Schieberegister 11 mit drei Ausgängen 12, 13, und 14. Am ersten und dritten Ausgang des Schieberegisters ist je eine Inverterstufe 15 bzw. 16 angeschlossen, an deren Ausgang jeweils ein Stellglied 17 bzw. 18 angeschlossen ist. In diesⁿ Stellgliedern 17 und 18 kann der Faktor a aus Gleichung 3 eingestellt werden. Am Ausgang des Stellgliedes 17 und am Ausgang 13 des Schieberegisters 11 ist eine erste Addierstufe 19 angeschlossen. Der Ausgang der ersten Addierstufe 19 und der Ausgang des zweiten Stellgliedes 18 sind an den beiden Eingängen einer weiteren Addierstufe 20 angeschlossen. Am Ausgang der Addierstufe 20 ist eine Verstärkerstufe 21 mit dem Verstärkungsfaktor

$$b = \frac{1}{1 - 2a - 2a^2}$$

angeschlossen. Mit dieser logischen Schaltung lässt sich der Betrag $\hat{I}_i$ für jeden Wert des aus einer Zelle der Photodiodenanordnung ausgelesenen Signals ermitteln. Dieses so ermittelte Signal wird einer Abtast- und Halteverstärkerstufe 22 und einem Analogdigitalwandler 23 zugeführt und kann nunmehr in digitaler Form in üblicher Weise weiterverarbeitet werden.

An sich ist dies der günstigste Weg für die Verarbeitung der Ausgangssignale der linearen Photodiodenanordnung. Es ist jedoch durchaus möglich, die Abtast- und Haltestufe 22 mit ihrem Analogdigitalwandler 23 zwischen die Photodiodenanordnung 7 und das Schieberegister 11 einzuschalten. In diesem Fall würde nicht ein Analogsignal, sondern ein digitales Signal in der Kompensationsschaltung 10 korrigiert.

Die Ergebnisse sollen nun anhand der Fig. 3 und der Tabelle näher betrachtet werden. In Fig. 3 ist zunächst ausgezogen die ideale Ladungsverteilung der betrachteten i-ten Diode dargestellt. Wie bereits eingangs ausgeführt, ist eine derartig ideale Ladungsverteilung nicht möglich. Die tatsächliche Verteilung der Ladungen auf die (i–1)te, i-te und (i+1)te Zelle ist durch gestrichelte Linien angedeutet. Nach der Kompensation des Übersprechens erhält man die durch strickpunktierte Linien dargestellte Ladungsverteilung.

Dies zeigt ausserdem noch die Tabelle I.

| Diode | Real | Ideal | Korrigiert (%) |
|-------|------|-------|----------------|
| i - 1 | 10%  | 0%    | 2,6%           |
| i     | 80%  | 100%  | 100%           |
| i + 1 | 10%  | 0%    | 2,6%           |

Zusammenfassend kann also gesagt werden, dass durch die neue Kompensationsschaltung das so lästige Übersprechen zwischen benachbarten Zellen einer linearen Photodiodenanordnung nahezu vollständig beseitigt werden kann.

**Patentansprüche**

1. Schaltungsanordnung für die Kompensation des zwischen benachbarten Zellen einer linearen Photodiodenanordnung auftretenden Übersprechens in einer Abtastvorrichtung für eine beleuchtete Vorlage, dadurch gekennzeichnet, dass zur praktischen Beseitigung des störenden Signalanteils a in der i-ten Zelle aus den Signalen der (i–1)ten und (i+1)ten Zelle unter Verwendung des Echtwertes $R_i$ des aus der i-ten Zelle abgeleiteten Signals und der Echtwerte der aus der (i+1)ten und (i–1)ten Zelle abgeleiteten Signale $R_{(i+1)}$ und $R_{(i-1)}$ und der Einwirkung des Signalanteils a auf das Echtsignal $R_i$ der i-ten Zelle, das kompensierte Signal $\hat{I}_i$ gemäss der Formel

$$\hat{I}_i \approx \frac{R_i - a R_{i+1} - a R_{i-1}}{1 - 2a - 2a^2}$$

abgeleitet wird.

2. Schaltungsanordnung nach Anspruch 1, dadurch gekennzeichnet, dass am Ausgang der linearen Photodiodenanordnung (7) ein Schieberegister (11) mit mindestens drei Ausgängen (12, 13, 14) angeschlossen ist, mit dessen ersten und dritten Ausgang je eine Inverterstufe (15, 16) und je ein daran angeschlossenes Stellglied (17, 18) für den Signalanteil a verbunden ist, und dass der Ausgang des ersten Stellgliedes (17) und der zweite Ausgang (13) des Schieberegisters (11) an einer ersten Addierstufe (19) angeschlossen sind, deren Ausgang an einem Eingang einer zweiten Addierstufe (20) angeschlossen ist, deren zweiter Eingang mit dem Ausgang des zweiten Stellgliedes (18) verbunden ist.

3. Schaltungsanordnung nach Anspruch 2, dadurch gekennzeichnet, dass zur Normalisierung am Ausgang der zweiten Addierstufe (20) ein Verstärker (21) mit dem Verstärkungsfaktor

$$\hat{I}_i \approx \frac{R_i - a R_{i+1} - a R_{i-1}}{1 - 2a - 2^a} \qquad (3)$$

angeschlossen ist.

4. Schaltungsanordnung nach einem der Ansprüche 1 bis 3, dadurch gekennzeichnet, dass zur Weiterverarbeitung der Abtastsignale eine Abtast- und Haltestufe (22) mit Verstärker und Analog-Digitalwandler (23) vorgesehen ist.

5. Schaltungsanordnung nach Anspruch 4, dadurch gekennzeichnet, dass die Abtast- und Haltestufe (22) der Kompensationsschaltung (10) nachgeschaltet ist.

6. Schaltungsanordnung nach Anspruch 4, dadurch gekennzeichnet, dass die Abtast- und Haltestufe (22) zwischen der linearen Photodiodenanordnung (7) und der Kompensationsschaltung (10) eingeschaltet ist.

## Claims

1. Circuit arrangement for compensating for the crosstalk occurring between adjacent cells of a linear photodiode array in a scanner for an illuminated object, characterized in that, using the actual value $R_i$ of the signal derived from the ith cell and the actual values of the signals $R(i+1)$ and $R(i-1)$ derived from the $(i+1)$st and the $(i-1)$st cell, the undesired signal portion a in the ith cell and the influence of said signal portion a on the actual signal $R_i$ of the ith cell are eliminated in practice by deriving the compensated signal $\hat{I}_i$ from the signals of the $(i-1)$st and the $(i+1)$st cell according to the formula

$$\hat{I}_i \approx \frac{R_i - a R_{i+1} - a R_{i-1}}{1 - 2a - 2a^2}$$

2. Circuit arrangement according to claim 1, characterized in that a shift register (11) with at least three outputs (12, 13, 14) is connected to the output of the linear photodiode array (7), the first and the third output of said shift register being connected to one inverter stage (15, 16) and one inverter stage linked control element (17, 18) each for the signal portion a, and that the output of the first control element (17) and the second output (13) of the shift register (11) are connected to a first adder (19), whose output is connected to one input of a second adder (20) having its second input connected to the output of the second control element (18).

3. Circuit arrangement according to claim 2, characterized in that for normalization, the second adder (20) is connected to an amplifier (21) with the amplification factor

$$b = \frac{1}{1 - 2a - 2a^2}$$

4. Circuit arrangement according to any one of the claims 1 to 3, characterized in that a scanning and holding stage (22) with an amplifier and an analog-to-digital converter (23) is provided for the further processing of the scanning signals.

5. Circuit arrangement according to claim 4, characterized in that the scanning and holding stage (22) is connected to follow the compensation circuit (10).

6. Circuit arrangement according to claim 4, characterized in that the scanning and holding stage (22) is connected between the linear photodiode array (7) and the compensation circuit (10).

## Revendications

1. Circuit de compensation de la diaphonie se produisant entre des cellules voisines d'un agencement linéaire de photodiodes dans un dispositif d'analyse d'un modèle éclairé, caractérisé par le fait que, pour pratiquement éliminer la partie perturbatrice a du signal, dans la $i^{ième}$ cellule, le signal compensé $\hat{I}_i$ est dérivé d'après la formule

$$\hat{I}_i \approx \frac{R_i - a R_{i+1} - a R_{i-1}}{1 - 2a - 2a}$$

à partir des signaux de la $(i-1)^{ième}$ et de la $(i+1)^{ième}$ cellules, en utilisant la valeur réelle $R_i$ du signal dérivé de la $i^{ième}$ cellule, les valeurs réelles des signaux dérivés de la $(i+1)^{ième}$ et de la $(i-1)^{ième}$ cellules, $R_{(i+1)}$ et $R_{(i-1)}$, et l'influence de la partie a du signal sur le signal réel $R_i$ de la $i^{ième}$ cellule.

2. Circuit selon la revendication 1, caractérisé par le fait qu'à la sortie de l'agencement linéaire de photodiodes (7) est connecté un registre à décalage (11) possédant au moins trois sorties (12, 13, 14), à la première et à la troisième sorties duquel est relié respectivement un étage inverseur (15, 16) ainsi qu'un organe de réglage (17, 18) connecté à cet étage, pour la partie a du signal, et que la sortie du premier organe de réglage (17) et la seconde sortie (13) du registre à décalage (11) sont connectés à un premier étage additionneur (19) dont la sortie est connectée à une entrée d'un second étage additionneur (20), la seconde entrée de ce dernier étant reliée à la sortie du second organe de réglage (18).

3. Circuit selon la revendication 2, caractérisé par le fait que, pour la normalisation, un amplificateur (21) dont le gain est

$$b = \frac{1}{1 - 2a - 2a^2}$$

est connecté à la sortie du second étage additionneur (20).

4. Circuit selon l'une quelconque des revendications 1 à 3, caractérisé par le fait que, pour le traitement ultérieur des signaux d'analyse, il est prévu un étage d'analyse et de maintien (22) avec amplificateur et convertisseur analogique-numérique (23).

5. Circuit selon la revendication 4, caractérisé par le fait que l'étage d'analyse et de maintien (22) se trouve en aval du circuit compensateur (10).

6. Circuit selon la revendication 4, caractérisé par le fait que l'étage d'analyse et de maintien (22) est intercalé entre l'agencement linéaire de photodiodes (7) et le circuit compensateur (10).

FIG. 1

FIG. 2

FIG. 3

5